# FASCICULE DE BREVET EUROPEEN

(11) **EP 2 183 121 B1**
(45) Date de publication et mention de la délivrance du brevet: **23.10.2013**
(21) Numéro de dépôt: 08775253.1
(22) Date de dépôt: 21.07.2008
(51) Int. Cl.: B60C 23/04

(54) **PNEUMATIQUE EQUIPE POUR LA FIXATION D'UN OBJET A SA PAROI ET SON PROCEDE DE FABRICATION**
REIFEN AUSGESTATTET FÜR DIE FIXIERUNG EINES OBJEKTS AN SEINER INNENWAND UND DESSEN HERSTELLUNGSPROZESS
TYRE EQUIPPED FOR ATTACHING AN OBJECT TO THE WALL THEREOF AND METHOD FOR MAKING SAME

(30) Priorité: 24.07.2007 FR 0705386
(43) Date de publication de la demande: 12.05.2010
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: BOROT, Martine, F-63118 Cebazat (FR); BATTOCCHIO, Claudio, Riom 63200 (FR); ADAMSON, John David, Greenville, SC 29605 (US)
(74) Mandataire: Dequire, Philippe Jean-Marie Denis
(86) Numéro de dépôt international: PCT/EP2008/059527
(87) Numéro de publication internationale: WO 2009/013269

(56) Documents cités:
- EP-A- 1 070 580
- WO-A-03/070496
- US-A1- 2005 076 992

## Description

### DOMAINE DE L'INVENTION

La présente invention est relative aux pneumatiques pour roues de véhicules. Elle concerne particulièrement la fixation aux pneumatiques d'objets fonctionnels associés. De tels objets peuvent être des capteurs, des circuits d'identification, et/ou des organes propres à communiquer avec l'environnement du pneumatique, à suivre son fonctionnement et l'évolution de ses caractéristiques physiques ou à fournir des alarmes, toutes fonctions plus ou moins élaborées destinées à offrir au marché des pneumatiques dits intelligents .

### ETAT DE LA TECHNIQUE

L'un des principaux problèmes à résoudre est celui de l'installation et du maintien des objets dans le pneumatique pendant des périodes parfois très longues, pouvant même courir pendant toute la durée de vie du pneumatique, et cela dans des conditions qui préservent l'intégrité physique et fonctionnelle du pneumatique et de ces objets dans un environnement particulièrement sévère, qu'il s'agisse des périodes de roulage ou de repos du véhicule du pneumatique ainsi équipé.

Le document WO 03/070496, en accord avec les preambules respectifs des revendications 1 et 12, décrit une solution dans laquelle la paroi interne du pneumatique est revêtue avant cuisson d'une languette de matériau dont la surface est garnie de boucles, formant une pièce d'une attache auto agrippante du type à boucles et crochets. L'autre pièce de cette attache est garnie de crochets qui sont capables de s'engager dans les boucles de la première pièce lorsqu'on rapproche les deux pièces l'une contre l'autre, après la cuisson du pneumatique et avant de le monter sur une jante. Sur la face opposée aux crochets de cette deuxième pièce est fixé l'objet à installer à l'intérieur de la cavité du pneumatique. Selon le document précité l'objet peut être pris en sandwich entre les faces revêtues de boucles et de crochets des deux pièces pour le retenir dans la position choisie de la paroi interne.

Cette solution, qui fait appel à une technique connue depuis longtemps pour réaliser la fixation amovible d'un objet sur un pneumatique, par exemple par le brevet US 3 260 294, présente l'avantage de permettre de récupérer l'objet à tout moment quand le pneumatique est démonté, soit pour le remplacer, soit pour le réutiliser en fin de vie du pneumatique, ou encore pour exploiter certaines données le concernant. Elle souffre cependant du défaut d'objets directement intégrés dans le pneumatique, à savoir que la présence de la première pièce de fixation de l'attache auto agrippante sur la paroi du pneumatique perturbe les déformations de celle-ci sous l'action des sollicitations dont elle est l'objet, d'une part au cours de la fabrication du pneumatique, si cette dernière comporte une ou plusieurs étapes impliquant une conformation de l'enveloppe, et, d'autre part, dans le fonctionnement du pneumatique au roulage, lorsque l'on se souvient que la paroi de celui-ci se déforme cycliquement à chaque tour de roue et qu'elle est sujette à des déformations supplémentaires pour encaisser tous les efforts et quelquefois les chocs consécutifs à son déplacement sur des chaussées inégales, voire garnies d'obstacles divers, tels que nids de poule, cailloux, bordures, etc.

### BREVE DESCRIPTION DE L'INVENTION

Au regard de ces difficultés, l'invention vise à réaliser la fixation d'un objet dans un pneumatique à l'aide d'une attache d'une attache du type auto agrippante d'une manière simple et qui perturbe peu le fonctionnement du pneumatique destinée à le recevoir et l'objet à fixer.

Conformément à cet objectif, un pneumatique selon un aspect de l'invention comporte une enveloppe dont la paroi est propre à supporter une pression de service après que l'enveloppe a été montée sur une roue de véhicule et comporte une attache du type auto agrippante comprenant une première partie solidaire de ladite paroi, une deuxième partie de cette attache étant propre à être couplée mécaniquement avec la première partie par des éléments de liaison, lorsqu'elle est appliquée contre la première partie, pour maintenir un objet en position de service dans le pneumatique, caractérisé en ce qu'une partie au moins des éléments de liaison font partie intégrante de la paroi du pneumatique.

Selon un mode de réalisation, lesdits éléments de liaison de la première partie sont des éléments allongés flexibles ayant une portion implantée ou noyée directement dans la paroi du pneumatique et une autre portion ou extrémité qui se projette à partir de cette paroi, par exemple vers l'intérieur de la cavité pneumatique. Ils sont conformés pour se coupler avec des éléments de liaison correspondants de la deuxième partie d'attache quand on applique cette dernière contre la première partie pour réaliser la fixation de l'objet associé à cette dernière.

Lesdits éléments allongés flexibles peuvent être réalisés à l'aide de fils flexibles partiellement noyés dans la paroi du pneumatique à l'emplacement de la première partie d'attache. Selon une réalisation plusieurs éléments de liaison peuvent être réalisés à partir d'un même élément de fil dont plusieurs secteurs sont noyés dans la paroi du pneumatique séparés par des secteurs qui émergent à la surface de ladite paroi.

Les éléments allongés flexibles de la première partie peuvent être des fils ou tiges d'accrochage dotés vers une extrémité à l'extérieur de ladite paroi d'une tête telle qu'un crochet, un harpon ou un champignon de la paroi, propre à agripper un élément correspondant de la deuxième partie d'attache.

Alternativement, les éléments allongés de ladite première partie d'attache sont avantageusement formés par des fils flexibles émergeant de la paroi pneumatique sous forme de boucles dont les extrémités sont noyées dans le matériau de la paroi pneumatique. Ces boucles sont propres à venir se coupler avec des fils flexibles recourbés en forme de crochets qui constituent alors des éléments de liaison associés à la deuxième partie d'attache. Selon un mode de réalisation avantageux ces boucles sont constituées chacune par la partie émergée d'une spire appartenant à une bobine de fil flexible intégrée dans la paroi du pneumatique au moment de la fabrication.

Enfin d'autres éléments de liaison femelles que des boucles peuvent être intégrés dans la paroi du pneumatique conformément à l'invention, par exemple des alvéoles ménagées dans celle-ci et propres à se coupler avec des éléments mâles formant des éléments de liaison de la deuxième partie d'attache.

Grâce à ces dispositions on peut réaliser la fixation de l'objet de manière amovible ou non en un emplacement interne ou externe de la paroi qui a été préalablement conçu et fabriqué à cet effet.

Le système d'attache proposé est très simple car il comporte peu d'éléments étrangers à la construction normale du pneumatique. Il préserve le secteur de la paroi d'enveloppe à laquelle est fixé l'objet en permettant notamment à celle-ci de se déformer selon son mode normal de fonctionnement sans fatigue on contrainte excessive. En effet, la première partie de l'attache n'offre aucune résistance à l'encontre des déformations de la paroi du pneumatique en cours de fonctionnement du fait que les éléments de liaison qui lui sont intégrés peuvent se déplacer librement les uns par rapport aux autres en suivant les déformations de la paroi sous l'action des sollicitations dont elle est l'objet.

De préférence, les éléments de liaison ménagent un jeu entre la première et la deuxième partie d'attache qui leur permet de limiter la transmission vers l'objet des déformations qui affectent la première partie d'attache en cours de fonctionnement du pneumatique.

A cet effet, la longueur des éléments allongés, tiges ou fils flexibles qui constituent les éléments de liaison, leur inclinaison par rapport à la surface des parties d'attache dont ils dépendent, leur distribution, leur densité sont déterminées pour conférer à la liaison une faculté de débattement tangentiel et/ou radial entre lesdites faces convenable pour éviter ou atténuer la transmission à l'objet attaché des déformations qui affectent ma première partie de l'attache sous l'effet des élongations, cisaillements, torsions subis par le pneumatique en roulage. Dans un mode de réalisation avantageux où les éléments de liaison de la première partie d'attache sont des boucles émergeant radialement par rapport à la surface de la paroi d'enveloppe on prévoit de ménager les jeux nécessaires en agissant sur le réglage de la longueur de ces dernières.

Cette disposition n'affecte pas la solidité de la fixation de l'objet. Les déformations de la première partie de l'attache sont essentiellement absorbées par la souplesse de la liaison réalisée entre les deux parties. La qualité de l'accrochage des éléments de liaison est maintenue tout au long de l'utilisation et l'objet lui-même se trouve donc au moins pour l'essentiel à l'abri des sollicitations mécaniques qui affectent la paroi à laquelle il est fixé dans l'environnement particulièrement sévère du pneumatique en roulage de manière à satisfaire au mieux les conditions de durabilité exigées par l'application.

L'invention s'étend également à la réalisation d'une deuxième partie d'attache auto agrippante qui comprend une plaque de support de l'objet à fixer et des éléments de liaison intégralement formés avec la dite plaque. Selon un mode de réalisation, ladite plaque est moulée avec l'objet. Les éléments de liaison de la deuxième partie peuvent être alors réalisés comme des tiges d'accrochage ayant une extrémité implantée dans la plaque de support ou intégralement formée avec elle et l'autre extrémité pourvue d'une tête propre à agripper un élément de liaison correspondant de la première partie d'attache.

Enfin l'invention vise le ou les procédés de fabrication d'un pneumatique équipé conformément aux aspects qui viennent d'être évoqués.

Un procédé de fabrication d'un pneumatique comportant une paroi à laquelle peut être fixé un objet à l'aide d'une attache auto agrippante comportant une première partie faisant partie intégrante de la paroi et une deuxième partie propre à être mécaniquement couplée avec la première partie par des éléments de liaison lors du rapprochement de ces deux parties l'une contre l'autre pour maintenir ledit objet dans la paroi, est caractérisé en ce que pendant l'assemblage à cru des composants du pneumatique on dépose un fil conformé dans trois dimensions sur une couche de gomme intérieure propre à être placée au contact d'une surface de moulage, puis on opère une cuisson du pneumatique cru, cette opération étant de nature à faire traverser la couche de gomme intérieure par des portions dudit fil flexible conformé pour laisser émerger des portions d'éléments filaires à la surface interne de la gomme intérieure après le démoulage, qui réalisent des éléments de liaison de la première partie de ladite attache.

Selon un mode de réalisation, on place la bobine contre un skim de gomme crue, ce skim pouvant lui-même être disposé en bordure d'un complexe caoutchouteux cru, et on poursuit l'assemblage en amenant le côté de la bobine opposé au skim en contact avec la gomme intérieure. Le skim maintient la bobine pendant la suite des opérations d'assemblage et les préparatifs de la cuisson. On peut avantageusement faire subir au skim cru un traitement de surface pour lui conférer un certain durcissement tendant à empêcher que les spires de la bobine ne traversent le skim pendant la cuisson. Dans un mode préférentiel, ce traitement du skim peut être obtenu par un processus d'irradiation.

Selon un mode de réalisation, le fil conformé est une bobine dont les spires traversent partiellement la couche de gomme intérieure de la paroi pour former des boucles d'accrochage à la surface intérieure de cette paroi. Selon un mode de réalisation complémentaire, on coupe des boucles formées à la surface de la paroi du pneumatique pour former des crochets qui constituent des éléments de liaison pour ladite première partie d'attache.

Conformément à une autre caractéristique, un procédé de fabrication comportant la réalisation d'une deuxième partie d'attache auto agrippante comportant un support garni d'éléments de liaison propres à s'accoupler avec une première partie d'attache solidaire de la paroi lorsqu'on l'applique contre cette dernière pour réaliser la fixation d'un objet est caractérisé en ce qu'on place une couche d'un matériau durcissant pour former une plaquette constituant le support dans un moule et on fixe à la couche de matériau durcissant, par une opération de moulage, des éléments d'accrochage qui se projettent vers l'extérieur de sa surface pour obtenir ladite deuxième partie. Il est avantageux d'intégrer en même temps l'objet à installer avec le support ou de réaliser un tel support dans le cadre de la fabrication, par exemple l'encapsulation de l'objet.

Selon une forme de mise en oeuvre du procédé précédent, le moule utilisé comporte un corps de moule présentant une cavité de moulage de la plaquette, une face interne de cette cavité étant garnie de trous qui présentent une extrémité recourbée ou élargie pour la formation de tiges d'éléments de liaison à l'intérieur dudit corps de moule. On coule ou injecte le matériau durcissant dans la cavité et on opère le durcissement du matériau de moulage pour obtenir ladite partie mobile garnie de tiges d'éléments de liaison à tête recourbée ou élargie.

Selon une variante, le moule utilisé comporte un corps présentant une cavité de moulage de la plaquette dont une face interne est garnie de perçages. On insère dans chaque perçage une tige d'élément de liaison flexible comportant une tête d'accrochage, en insérant ladite tête la première dans ledit perçage, on coule ou injecte le matériau durcissant dans la cavité et on opère le durcissement du matériau de moulage pour obtenir ladite partie mobile garnie d'éléments d'accrochage mâles.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente très schématiquement un exemple de réalisation d'une paroi d'un pneumatique équipé d'une attache auto agrippante selon l'invention.

Les figures 2a et 2b illustrent un mécanisme de fonctionnement de la paroi du pneumatique selon l'invention lorsque elle subit des déformations en cours d'utilisation.

Les figures 3a et 3b illustrent deux étapes de la réalisation d'une paroi de pneumatique comportant des éléments d'attache auto agrippante avec boucles ancrées directement dans la paroi interne du pneumatique.

Les figures 4a et 4b illustrent schématiquement deux variantes de réalisation par moulage d'une deuxième partie d'attache auto agrippante garnie de crochets.

### DESCRIPTION D'UN OU PLUSIEURS EXEMPLES DE REALISATION

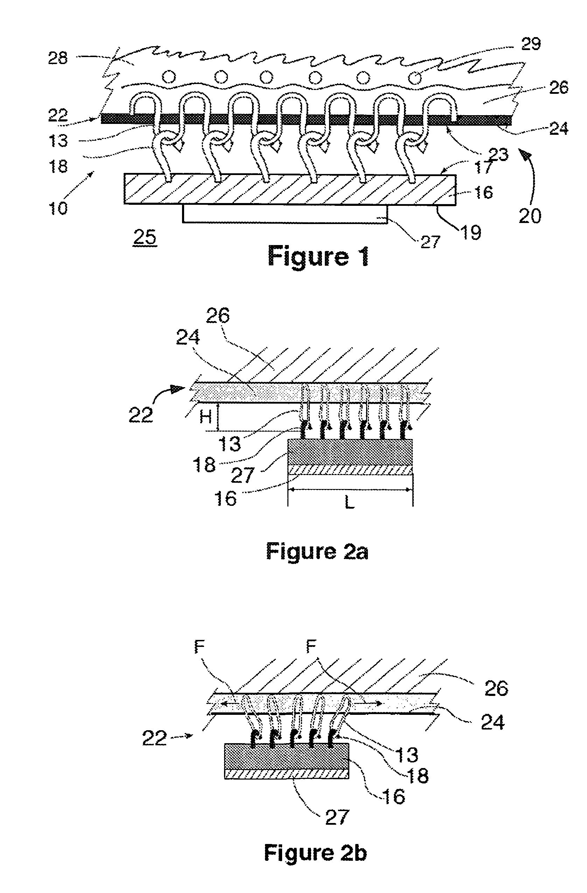

Sur la figure 1, une attache auto agrippante 10 est présente une première partie aménagée intégralement dans une face interne 23 de la paroi 22 d'une enveloppe pneumatique 20. Dans cet exemple d'un pneumatique sans chambre à air, cette paroi délimite une cavité gonflable. Elle est revêtue d'une couche de gomme intérieure 24 destinée à optimiser son étanchéité au gaz de gonflage. Derrière la couche de gomme 24 est disposée, directement ou par l'intermédiaire d'une ou plusieurs nappes de gomme 26, une nappe carcasse 28 dont les câbles de renfort 29 apparaissent en coupe.

Dans la surface de la couche de gomme intérieure 24 sont fixés des éléments d'accrochage femelle tels que des boucles 13 résistantes en fil flexible aramide, polyamide, polyester ou autre qui constituent la première partie d'attache auto agrippante 10. Les boucles 13 sont dirigées vers l'intérieur de la cavité 25 du pneumatique 20 pour permettre à des éléments d'accrochage mâles tels que des crochets de venir s'y fixer comme expliqué ci-après.

Une deuxième partie de l'attache 10 est formée par un support mince, ou plaquette 16 représentée très schématiquement sur la figure 1 en position accouplée avec les boucles 13 de la première partie. Une face 17 de la plaquette 16, tournée vers la paroi interne 22 du pneumatique, est garnie de d'éléments d'accrochage mâles tels que des crochets 18, qui se projettent vers l'extérieur à partir de la face 17 de la plaquette 16 et dont au moins un certain nombre sont, dans la position d'accouplement représentée, engagés dans des boucles 13 respectives garnissant la face interne de paroi pneumatique 22. Sur l'autre face 19 de la plaquette à crochets, tournée vers l'intérieur de la cavité 25 du pneumatique, est fixé un objet fonctionnel, par exemple un circuit électronique 27 encapsulé dans un matériau de protection. Ce circuit peut remplir une ou plusieurs fonctions pour pneumatique intelligent, à savoir tout d'abord une fonction de communication active ou passive en réponse à une sollicitation électrique, magnétique ou hertzienne. Il peut également accomplir des fonctions de mesure dans l'environnement, telles que température et pression, ou des mesures plus opérationnelles concernant des contraintes qui affectent le pneumatique, des paramètres dynamiques telles que des accélérations. Il peut enfin exercer, sans que cette liste soit limitative, des fonctions de surveillance ou d'alarme.

Les crochets 18 sont réalisés ici en acier et implantés dans une toile ou tricot d'aramide constituant la plaquette 16, ces matériaux étant propres à résister convenablement à l'environnement sévère régnant dans la cavité pneumatique, tant en pression qu'en température, et cela pendant des périodes pouvant couvrir plusieurs années.

On sait qu'au cours de la rotation de la roue, la paroi 22 du pneumatique se déforme cycliquement depuis le moment où une zone quelconque à la surface de sa bande de roulement entre dans l'aire de contact du pneumatique avec la surface de roulement jusqu'au moment où elle en ressort, ainsi que dans une moindre mesure pendant tout le reste de la course circulaire de cette zone autour de l'axe de la roue, jusqu'à ce qu'elle revienne dans l'aire de contact. Par ailleurs la paroi 22 subit aussi les chocs transmis par les inégalités de la chaussée au contact de laquelle se déplace la roue, en particulier quand elle rencontre de obstacles importants tels que ralentisseurs, pierres, nids de poule, bordures diverses, etc. Toutes ces sollicitations se traduisent par des contraintes d'étirement, de cisaillement, de torsion dans la paroi du pneumatique. En conséquence les points d'implantation des boucles 13 dans la face interne de la paroi pneumatique 22 peuvent se rapprocher ou s'écarter les uns des autres en suivant les déformations de la paroi 22. On remarque qu'elles peuvent le faire sans contrainte tant que la liaison entre les boucles et les crochets 18 est suffisamment lâche pour le permettre sans brider la déformation de la paroi.

Ainsi lorsque l'enveloppe du pneumatique pourvue d'une première partie d'attache auto agrippante intégrée à sa structure est sortie de fabrication, il suffit, soit avant l'expédition du pneumatique depuis le lieu de fabrication, soit au moment de son montage sur une jante, de lui associer l'objet fonctionnel désiré en fonction des applications prévues pour ce pneumatique. L'assemblage est fait par application et pression directe de la plaquette 16 de la deuxième partie d'attache 10 avec son circuit 27 sur la première partie pour provoquer l'engagement des crochets ou harpons 18 de la deuxième partie dans les boucles 13 émergeant de la paroi la première partie. A cet effet les boucles 13 sont réalisées à l'aide d'un fil flexible qui leur confère une certaine raideur, grâce à laquelle elles peuvent rester dressées dans une position à la surface de la paroi 22 et y revenir lorsqu'elles en sont écartées, pour pouvoir être engagées avec une bonne probabilité par un des crochets de la deuxième partie lorsque celle-ci est appliquée au contact de la paroi. Cette dernière opération peut-être réalisée manuellement ou mécaniquement, en particulier, dans ce dernier cas, si une pression d'application élevée et/ou convenablement dosée est requise à cet effet, par exemple avec des éléments d'accrochage relativement rigides. On a déterminé que, lorsque les deux parties d'attache sont accouplées, il était souhaitable qu'elles soient capables de résister à des efforts tendant à séparer l'objet de la paroi jusqu'à un niveau qui peut atteindre ou dépasser 10 N/cm². Ce critère offre une bonne sécurité vis-à-vis des efforts d'arrachement subis en fonctionnement (notamment à raison de la force centrifuge), soit perpendiculairement à la paroi du pneumatique, soit en cisaillement, par l'objet et la deuxième partie de l'attache auto agrippante, en fonction de l'emplacement de la paroi où l'attache est positionnée.

A cet égard, la fixation ici évoquée peut être réalisée directement dans le sommet de la paroi du pneumatique, sous la bande de roulement. Dans ce cas, la force centrifuge agit en compression dans le sens d'un rapprochement des première et deuxième parties de l'attache 10 l'une contre l'autre. D'autres sollicitations qui peuvent être importantes en cisaillement ou en arrachement résultent des efforts cycliques subis par le sommet du pneumatique en roulement ainsi que des contraintes transmises par les inégalités de la chaussée et des chocs d'obstacles, comme il a été expliqué plus haut. L'objet 27 peut également être fixé dans le flanc du pneumatique, à l'extérieur ou, plus fréquemment, à l'intérieur. Dans cette position, l'attache doit alors résister aux efforts de cisaillement résultant de la force centrifuge et des autres contraintes qui se développent dans la paroi du pneumatique. L'objet peut enfin être localisé dans ou près de la zone basse.

Les attaches auto agrippantes industrielles courantes réalisent un serrage très efficace et ne laissent pratiquement aucun jeu mécanique entre les deux parties de l'attache. Ainsi, les efforts qui affectent l'enveloppe sont quasi intégralement transmis à l'objet. Si aucune précaution n'était prise, la rigidité de l'objet risquerait d'empêcher la première partie de l'attache de se déformer et par la même d'entraver les déformations de la paroi d'enveloppe à laquelle il est attaché, contrairement à l'objectif exposé plus haut. Réciproquement, l'objet lui-même devrait supporter les efforts de cisaillement éventuellement importants qui sont transmis par la paroi à l'attache, ce dont devraient tenu compte la construction et l'encapsulation de l'objet. Suivant une caractéristique avantageuse, on s'est rendu compte qu'on pouvait éviter ces risques et créer une certaine faculté de découplage mécanique entre la première partie de l'attache et la seconde, en jouant sur certaines caractéristiques des éléments de liaison entre ces deux parties telles que leur longueur, leur souplesse, leur inclinaison par rapport à l'interface entre les deux parties, ou encore leur flexibilité, voire, le cas échéant, leurs caractéristiques d'élasticité propre. On arrive ainsi à assurer à la fois une certaine protection de la paroi de l'enveloppe autour de l'interface et la préservation de l'objet 27 contre les efforts développés dans cette paroi.

Les figures 2a et 2b illustrent ce mécanisme à l'aide d'une vue en coupe de la paroi de l'enveloppe par un plan parallèle à la direction principale de déformation de cette paroi. Les boucles 13 de l'attache 10 ont leurs extrémités prises dans la paroi 22. Du côté opposé, elles sont engagées par les crochets 18 solidaires de la plaquette 16 portant l'objet 27 dont la longueur dans la direction principale de déformation mentionnée est désignée par L. Dans la figure 2a la paroi 22 du pneumatique revêtue de la couche de gomme intérieure 24 est en équilibre statique à un instant donné entre la pression de gonflage et les forces de réaction développées par la structure de l'enveloppe pneumatique. Les boucles 13 ont une hauteur H qui laisse apparaître un jeu dont la représentation est volontairement exagérée dans la figure 2a, entre la paroi 22 et la plaquette 16.

La figure 2b illustre la situation lorsque la paroi 22 subit en cours de roulage une sollicitation pour l'une des causes mentionnées précédemment qui se traduit par une élongation tangentielle illustrée par les flèches F. Comme le montrent schématiquement les figures, les boucles implantées à cet endroit s'écartent. Du fait de leur hauteur suffisante, l'écartement des boucles est compensé par le fait qu'elles modifient leurs inclinaison en se couchant et corrélativement en provoquant une diminution de la distance entre la paroi 22 et la plaquette 16 sans que les contraintes de tension qui affectent la paroi 22 du pneumatique ne soient transmises via les crochets 18 à la plaquette 16 ni à l'objet 27. Les objectifs énoncés précédemment peuvent donc être atteints grâce au réglage de la hauteur des boucles (on pourrait également agir sur la longueur des crochets) en fonction de la longueur de la plaquette 16 portant l'objet 27. Ainsi par exemple avec une plaquette de longueur L égale à 50 millimètres et une hauteur H de boucle de 5 millimètres, la paroi du pneumatique peut subir une élongation de 10% sans que la plaquette 16 soit affectée avec une inclinaison de 30° des boucles extrêmes 13.

Suivant son mode de construction, l'accrochage fourni par l'attache auto agrippante peut-être réversible. On peut donc récupérer l'objet fonctionnel après sa mise en place, soit après une période de fonctionnement relativement brève à des fins d'exploitation de données enregistrées dans l'objet fonctionnel, notamment s'il est attaché à l'extérieur du flanc, soit à l'occasion d'un démontage du pneumatique ou en fin de vie s'il est à l'intérieur, aux fins d'analyse ou de réutilisation le cas échéant. Il est également possible de rendre la fixation de l'objet inamovible une fois mis en place dans le pneumatique. On peut à cet égard utiliser des attaches auto agrippantes non réversibles, c'est à dire dans lesquelles l'engagement d'éléments mâles tels que des hameçons dans des éléments femelles est irréversible par construction. On peut aussi utiliser des attaches dont les boucles ou les crochets sont fabriqués avec des fils synthétiques dont on modifie les caractéristiques physiques après l'accrochage. L'attache reste alors amovible jusqu'au moment où l'on applique localement un apport de chaleur, par exemple, propre à élever la température des crochets pour les faire se rétracter d'une manière qui ne leur permette plus de se désengager des boucles sans détruire l'attache.

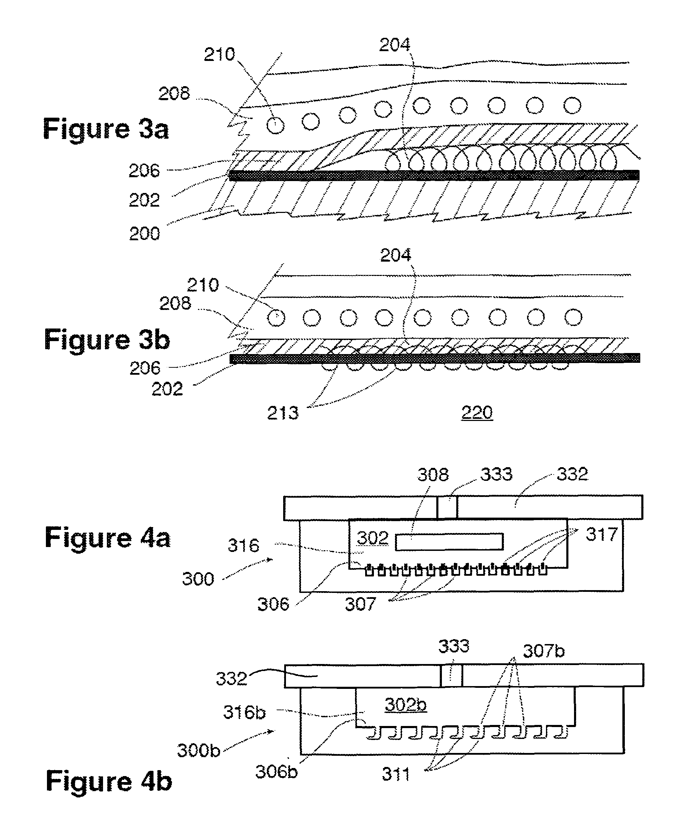

Les figures 3a et 3b illustrent une méthode de fabrication d'un pneumatique intégrant dans sa paroi les éléments d'accrochage d'une première partie d'une attache auto agrippante pour la mise en oeuvre de l'invention. Lors de l'assemblage des composants du pneumatique à cru, (figure 3a), on dépose d'abord sur un support d'assemblage 200, de façon classique, une couche 202 d'une gomme d'étanchéité. Sur la couche 202 on dispose une bobine 204 d'un fil hélicoïdal en acier laitonné, dont les spires ont des dimensions et des caractéristiques mécaniques appropriées en fonction des indications qui ressortent de la description qui suit. La bobine 204 est recouverte d'un skim, ou mince couche de gomme, 206 qui peut être de même nature que la gomme intérieure 202 ici en caoutchouc butyle. Une nappe carcasse 208 dont on aperçoit les câbles de renfort 210 en coupe, entourés d'un calandrage de gomme, est ensuite déposée sur le skim. L'assemblage est complété de façon habituelle et la confection du pneumatique cru poursuivie jusqu'à la cuisson de l'ébauche à cru dans un moule de vulcanisation sous une pression qui peut atteindre 50 bars et à une température qui peut s'élever à 200°C. La figure 3b représente schématiquement une coupe de la paroi du pneumatique ainsi cuit, au droit de la bobine de fil hélicoïdal 204. On constate que les spires de la bobine 204 ont partiellement traversé la gomme intérieure 202 pour sortir à l'intérieur de la cavité 220 du pneumatique sous la forme de boucles 213. Ces éléments convenablement localisés à l'intérieur de la paroi du pneumatique peuvent servir d'accrochage femelle pour une liaison auto agrippante du type décrit précédemment. Avantageusement, on peut prévoir de faire subir au skim un traitement ayant pour objet de le durcir, par exemple par une irradiation appropriée, afin de s'opposer à toute tentative de pénétration par la bobine de fil 204 lors de l'opération de cuisson. On note que grâce à cette solution les éléments d'accrochage ainsi réalisés ne nécessitent pas de support d'ancrage autonome et ne sont donc pas susceptibles d'entraver les déformations de paroi du pneumatique, tant à cru qu'à cuit, ni de nuire à l'endurance de l'ensemble. En outre le choix des spires de la bobine 204 permet de régler la longueur des boucles obtenues (ou des crochets) pour obtenir le découplage souhaité pour la réalisation considérée.

Selon une variante d'exécution, non représentée au dessin, on coupe les portions de spires ressortant de la gomme intérieure après la cuisson pour former des éléments d'accrochage mâles, ou crochets, aptes à s'accoupler avec des éléments femelle d'une partie d'attache auto agrippante amovible initialement.

Les figures 4a et 4b illustrent deux modes de réalisation d'une deuxième partie, ou partie mobile, d'attache auto agrippante analogue à l'attache 10 de la figure 1, qui n'est pas intégrée d'origine dans la paroi du pneumatique. Un moule 300 pour former une plaquette 316 munie de crochets, comprend une cavité de moulage 302 ayant la forme générale de la plaquette 316. L'une des grandes faces de la cavité 302 est fermée par un couvercle de moule 332 comportant une ouverture 333 par laquelle un matériau de moulage durcissant peut être injecté. Le fond 306 de la cavité 302 est percé d'une multitude de forages 307. En fabrication, un élément d'accrochage 317, constitué par un tronçon de fil métallique à tête recourbée, est enfoncé, tête la première, dans chacun des forages 307. Ensuite, un objet 308 à encapsuler est inséré et maintenu en place dans la cavité 302, par un moyen non représenté, au dessus des crochets 317. Le moule est fermé et un matériau durcissant est admis par l'ouverture d'injection 333 pour former après la réaction de moulage la plaquette 316 incorporant l'objet 308 et garnie sur une des ses grandes faces d'un tapis de crochets 317 propres à venir s'insérer dans les éléments femelles de la première partie de l'attache auto agrippante considérée. Bien entendu cette solution permet d'adapter la longueur et les autres caractéristiques des crochets en fonction des souhaits du concepteur de l'attache compte tenu notamment des impératifs de débattement énoncés plus haut..

La figure 4b illustre une variante du procédé de la figure 4a dans laquelle on utilise un moule 300-b analogue au moule 300 à la différence que la cavité 302-b a un fond 306-b percé de trous de moulage 307-b (convenablement éventés) dont les extrémités 311 à l'intérieur de la paroi du moule sont recourbées. Un matériau plastique durcissant injecté dans la cavité 302-b pour former le corps d'une plaquette 316-b d'une attache auto agrippante vient remplir également les trous de moulage 311 pour former à la surface de la plaquette 316-b, après durcissement, des crochets à la forme des trous 311, possédant une flexibilité appropriée pour se démouler et pouvoir s'accoupler avec les boucles d'une autre partie d'attache non représentée. Le procédé s'adapte bien entendu à la fabrication de tiges d'accrochage munies de têtes en forme de champignons se projetant à partir de la surface de la plaquette 316-b.

Bien entendu, l'invention n'est pas limitée aux exemples décrits et représentés ici et diverses modifications peuvent y être apportées sans sortir du cadre défini par les revendications annexées.

## Revendications

1. Pneumatique comportant une enveloppe, dont la paroi est propre à supporter une pression de service après que l'enveloppe a été montée sur une roue de véhicule, et une attache du type auto agrippant qui comprend une première partie solidaire de ladite paroi, une deuxième partie de cette attache étant propre à être couplée mécaniquement avec la première partie par des éléments de liaison, lorsqu'elle est appliquée contre la première partie, pour maintenir un objet en position de service dans le pneumatique, **caractérisé en ce qu'**une partie au moins des dits éléments de liaison (13) font partie intégrante de la paroi (22) dudit pneumatique.

2. Pneumatique selon la revendication 1, **caractérisé en ce que** lesdits éléments de liaison (13) de la première partie sont des éléments de type femelle propres à être agrippés par des éléments de liaison mâles (18) solidaires de la deuxième partie d'attache (16).

3. Pneumatique selon la revendication 2, **caractérisé en ce que** lesdits éléments de liaison de la première partie sont des boucles de fil flexible (13).

4. Pneumatique selon la revendication 3, **caractérisé en ce que** lesdites boucles de fil flexible ont une longueur et/ou une inclinaison ajustée pour ménager une liberté de jeu entre la première et la deuxième partie d'attache.

5. Pneumatique selon l'une des revendications 3 et 4, **caractérisé en ce que** lesdites boucles de fil flexible sont des portions de spires d'un fil bobiné (204) partiellement noyé dans le matériau constitutif de la paroi et qui émergent à la surface de celle-ci.

6. Pneumatique selon la revendication 2, **caractérisé en ce que** lesdits éléments femelle sont des alvéoles ménagées dans la surface de la paroi du pneumatique et propres à recevoir des éléments mâles de la deuxième partie d'attache.

7. Pneumatique selon la revendication 1, **caractérisé en ce que** lesdits éléments de liaison de la première partie sont des tiges d'accrochage ayant une extrémité implantée dans la paroi du pneumatique et l'autre extrémité pourvue d'une tête propre à agripper un élément de liaison correspondant de la deuxième partie d'attache.

8. Pneumatique selon l'une des revendications 1 à 5 et 7, dans lequel les éléments de liaison de la première partie sont constituées par des fils flexibles implantés dans la paroi du pneumatique, **caractérisé en ce que** ces éléments se projettent depuis ladite paroi vers l'intérieur de la cavité pneumatique.

9. Pneumatique selon l'une quelconque des revendications précédentes, dans lequel l'objet à fixer est solidaire de la deuxième partie d'attache, **caractérisé en ce que** cette deuxième partie d'attache comprend une plaque de support de l'objet et des éléments de liaison qui sont intégralement formés avec la dite plaque.

10. Pneumatique selon la revendication 9, **caractérisé en ce que** ladite plaque est moulée avec l'objet.

11. Pneumatique selon l'une des revendications 9 et 10, **caractérisé en ce que** lesdits éléments de liaison de la deuxième partie sont des tiges d'accrochage ayant une extrémité implantée dans la plaque de support et l'autre extrémité pourvue d'une tête propre à agripper un élément de liaison correspondant de la première partie d'attache.

12. Procédé de fabrication d'un pneumatique comportant une paroi à laquelle peut être fixé un objet fonctionnel dans une position de service à l'aide d'une attache auto agrippante comportant une première partie solidaire de la paroi et une deuxième partie propre à être mécaniquement couplée avec la première partie par des éléments de liaison lors du rapprochement de ces deux parties l'une contre l'autre pour maintenir ledit objet dans la paroi, procédé **caractérisé en ce que** pendant l'assemblage à cru des composants du pneumatique on dépose à la surface de l'ébauche d'enveloppe un fil conformé, au moins dans une dimension transversale par rapport à cette surface, sur une couche de gomme intérieure propre à être placée au contact d'une surface de moulage, puis on opère la cuisson du pneumatique cru, cette opération étant de nature à faire traverser la couche de gomme intérieure par des portions dudit fil conformé pour laisser émerger des éléments filaires à la surface interne de la gomme intérieure après le démoulage, propre à réaliser des éléments de liaison de la première partie de ladite attache.

13. Procédé selon la revendication 12, **caractérisé en ce que** le fil conformé comporte des spires flexibles qui après avoir traversé la couche de gomme intérieure de la paroi forment des boucles d'accrochage à la surface de cette paroi.

14. Procédé selon la revendication 13, **caractérisé en ce qu'**on coupe des boucles formes à la surface de la paroi du pneumatique pour former des crochets d'éléments de liaison de la dite première partie d'attache.

15. Procédé selon l'une des revendication 12 à 14, comportant la réalisation d'une deuxième partie de l'attache auto agrippante comportant un support garni d'éléments de liaison propres à s'accoupler avec la première partie lorsqu'on l'applique contre cette dernière pour réaliser la fixation de l'objet, **caractérisé en ce qu'**on place une couche d'un matériau durcissant dans un moule pour former une plaquette formant le support, on y implante les éléments d'accrochage de manière qu'ils se projettent vers l'extérieur par rapport à la surface de la couche de matériau durcissant, et on opère le moulage pour obtenir ladite deuxième partie.

## Patentansprüche

1. Luftreifen, der einen Mantel, dessen Wand einen Betriebsdruck aushalten kann, nachdem der Mantel auf ein Fahrzeugrad montiert wurde, und eine Halterung vom selbsthaftenden Typ aufweist, die einen ersten fest mit der Wand verbundenen Teil enthält, wobei ein zweiter Teil dieser Halterung durch Verbindungselemente mechanisch mit dem ersten Teil gekoppelt werden kann, wenn er gegen den ersten Teil gedrückt wird, um einen Gegenstand in der Betriebsstellung im Luftreifen zu halten, **dadurch gekennzeichnet, dass** mindestens ein Teil der Verbindungselemente (13) integrierender Bestandteil der Wand (22) des Luftreifens ist.

2. Luftreifen nach Anspruch 1, **dadurch gekennzeichnet, dass** die Verbindungselemente (13) des ersten Teils Aufnahmeelemente sind, an denen fest mit dem zweiten Halterungsteil (16) verbundenen Einsteck-Verbindungselemente (18) haften können.

3. Luftreifen nach Anspruch 2, **dadurch gekennzeichnet, dass** die Verbindungselemente des ersten Teils Schlaufen eines biegsamen Drahts (13) sind.

4. Luftreifen nach Anspruch 3, **dadurch gekennzeichnet, dass** die Schlaufen aus biegsamem Draht eine Länge und/oder eine Neigung haben, die angepasst wird, um eine Spielfreiheit zwischen dem ersten und dem zweiten Halterungsteil einzurichten.

5. Luftreifen nach einem der Ansprüche 3 und 4, **dadurch gekennzeichnet, dass** die Schlaufen aus biegsamem Draht Abschnitte von Windungen eines teilweise in das die Wand bildende Material eingebetteten, aufgewickelten Drahts (204) sind und an deren Oberfläche austreten.

6. Luftreifen nach Anspruch 2, **dadurch gekennzeichnet, dass** die Aufnahmeelemente Aushöhlungen sind, die in der Oberfläche der Wand des Luftreifen angeordnet und in der Lage sind, Einsteckelemente des zweiten Halterungsteils aufzunehmen.

7. Luftreifen nach Anspruch 1, **dadurch gekennzeichnet, dass** die Verbindungselemente des ersten Teils Einhakstangen sind, von denen ein Ende in die Wand des Luftreifens eingesetzt und das andere Ende mit einem Kopf versehen ist, der an einem entsprechenden Verbindungselement des zweiten Halterungsteils haften kann.

8. Luftreifen nach einem der Ansprüche 1 bis 5 und 7, wobei die Verbindungselemente des ersten Teils aus biegsamen Drähten bestehen, die in die Wand des Luftreifens eingesetzt sind, **dadurch gekennzeichnet, dass** diese Elemente von der Wand zur Innenseite des Hohlraums des Luftreifen vorstehen.

9. Luftreifen nach einem der vorhergehenden Ansprüche, wobei der zu befestigende Gegenstand fest mit dem zweiten Halterungsteil verbunden ist, **dadurch gekennzeichnet, dass** dieser zweite Halterungsteil eine Tragplatte des Gegenstands und Verbindungselemente enthält, die aus einem Stück mit der Platte geformt sind.

10. Luftreifen nach Anspruch 9, **dadurch gekennzeichnet, dass** die Platte mit dem Gegenstand geformt wird.

11. Luftreifen nach einem der Ansprüche 9 und 10, **dadurch gekennzeichnet, dass** die Verbindungselemente des zweiten Teils Einhakstangen sind, von denen ein Ende in die Tragplatte eingesetzt und das andere Ende mit einem Kopf versehen ist, der an einem entsprechenden Verbindungselement des ersten Halterungsteils haften kann.

12. Verfahren zur Herstellung eines Luftreifens, der eine Wand aufweist, an der ein Funktionsgegenstand mit Hilfe einer selbsthaftenden Halterung in einer Betriebsstellung befestigt werden kann, die einen ersten fest mit der Wand verbundenen Teil und einen zweiten Teil aufweist, der durch Verbindungselemente bei der gegenseitigen Annäherung dieser zwei Teile mit dem ersten Teil mechanisch gekoppelt werden kann, um den Gegenstand in der Wand zu halten, wobei das Verfahren **dadurch gekennzeichnet ist, dass** während des Zusammenbaus der Bestandteile des Luftreifens im Rohzustand an der Oberfläche des Mantelrohlings ein angepasster Draht zumindest in einer Querrichtung bezüglich dieser Oberfläche auf einer inneren Gummischicht verlegt wird, die in Kontakt mit einer Formfläche angeordnet werden kann, dann das Härten des rohen Luftreifens durchgeführt wird, wobei dieser Vorgang so ist, dass die innere Gummischicht von Abschnitten des angepassten Drahts durchquert wird, um nach dem Ausformen Drahtelemente an der Innenfläche des inneren Gummis austreten zu lassen, die Verbindungselemente des ersten Teils der Halterung realisieren können.

13. Verfahren nach Anspruch 12, **dadurch gekennzeichnet, dass** der angepasste Draht biegsamen Windungen aufweist, die, nachdem sie die innere Gummischicht der Wand durchquert haben, Einhakschlaufen an der Oberfläche dieser Wand formen.

14. Verfahren nach Anspruch 13, **dadurch gekennzeichnet, dass** an der Oberfläche der Wand des Luftreifens geformte Schlaufen geschnitten werden, um Haken von Verbindungselementen des ersten Halterungsteils zu formen.

15. Verfahren nach einem der Ansprüche 12 bis 14, das die Herstellung eines zweiten Teils der selbsthaftenden Halterung aufweist, der einen Träger aufweist, der mit Verbindungselementen bestückt ist, die sich mit dem ersten Teil koppeln können, wenn er gegen diesen gedrückt wird, um die Befestigung des Gegenstands durchzuführen, **dadurch gekennzeichnet, dass** eine Schicht eines härtenden Materials in einem Formwerkzeug angeordnet wird, um eine den Träger formende Platte zu formen, die Einhakelemente so in diese eingesetzt werden, dass sie bezüglich der Oberfläche der Schicht aus härtendem Materials nach außen vorstehen, und das Formen durchgeführt wird, um den zweiten Teil zu erhalten.

## Claims

1. Tyre comprising a casing, the wall of which is suitable for withstanding a service pressure after the casing is mounted on a wheel of a vehicle, and a touch-close type attachment that comprises a first part fixed to said wall, a second part of this attachment being suitable for joining mechanically to the first part by connection elements, when applied to the first part, to keep an object in a service position inside the tyre, said tyre being **characterized in that** at least some of said connection elements (13) are an integral part of the wall (22) of said tyre.

2. Tyre according to Claim 1, **characterized in that** said connection elements (13) of the first part are female type elements suitable to be gripped by male connection elements (18) fixed to the second attachment part (16).

3. Tyre according to Claim 2, **characterized in that** said connection elements of the first part are loops of flexible thread (13).

4. Tyre according to Claim 3, **characterized in that** the length and/or angle of said loops of flexible thread are such as to allow some play between the first and second attachment parts.

5. Tyre according to either of Claims 3 and 4, **characterized in that** said loops of flexible thread are portions of turns of a coiled thread (204) partially embedded in the material of the wall and protruding from its surface.

6. Tyre according to Claim 2, **characterized in that** said female elements are receptacles formed in the surface of the wall of the tyre and suitable for receiving male elements of the second attachment part.

7. Tyre according to Claim 1, **characterized in that** said connection elements of the first part are fastening pins having one end implanted in the wall of the tyre and the other end provided with a head suitable for gripping a corresponding connection element of the second attachment part.

8. Tyre according to one of Claims 1 to 5 and 7, in which the connection elements of the first part are flexible threads implanted in the wall of the tyre, **characterized in that** these elements project from said wall into the tyre cavity.

9. Tyre according to any one of the preceding claims, in which the object to be attached is fixed to the second attachment part, said tyre being **characterized in that** this second attachment part comprises a backing plate for the object, and connection elements that are formed integrally with said plate.

10. Tyre according to Claim 9, **characterized in that** said plate is moulded with the object.

11. Tyre according to either of Claims 9 and 10, **characterized in that** said connection elements of the second part are fastening pins having one end implanted in the backing plate and the other end provided with a head suitable for gripping a corresponding connection element belonging to the first attachment part.

12. Method for making a tyre comprising a wall to which a functional object can be attached in a service position using a touch-close attachment comprising a first part fixed to the wall and a second part suitable for joining mechanically to the first part by connection elements when these two parts are brought together, in order to keep said object in the wall, said method being **characterized in that**, during the green assembly of the components of the tyre, there is deposited on the surface of the uncured casing a thread shaped in at least a transverse dimension relative to this surface, on a rubber innerliner suitable for placing in contact with a moulding surface, after which the green tyre is cured, this operation being of a nature such that portions of said shaped thread pass through the rubber innerliner so that thread elements protrude from the inside surface of the rubber innerliner after demoulding, and are suitable for acting as connection elements for the first part of said attachment.

13. Method according to Claim 12, **characterized in that** the shaped thread comprises flexible turns which after passing through the rubber innerliner of the wall form attachment loops on the surface of this wall.

14. Method according to Claim 13, **characterized in that** loops formed on the surface of the tyre wall are cut to form hooks for connection elements on said first attachment part.

15. Method according to one of Claims 12 to 14, comprising the making of a second part of the touch-close attachment comprising a backing provided with connection elements suitable for joining to the first part when applied to the latter to secure the object, **characterized in that** a layer of a curable material is placed in a mould to form a mounting forming the backing, the fastening elements are implanted in such a way that they project from the surface of the layer of curable material, and the moulding operation is carried out to produce said second part.
